# EUROPÄISCHE PATENTANMELDUNG

(11) **EP 3 546 307 A1**
(43) Veröffentlichungstag der Anmeldung: **02.10.2019**
(21) Anmeldenummer: 18164488.1
(22) Anmeldetag: 28.03.2018
(51) Int. Cl.: B60T 15/20

(54) **ANHÄNGERSTEUERVENTIL FÜR EINEN ANHÄNGER EINES NUTZFAHRZEUGS**

(71) Anmelder: KNORR-BREMSE Systeme für Nutzfahrzeuge GmbH, 80809 München (DE)
(72) Erfinder: MAJLATH, Attila, 6000 Kecskemet (HU); DALI, Istvàn, 6000 Kecskemet (HU); RIZZI, Stefano, 20035 Lissone (IT); FARKAS, Gabor, 6000 Kecskemet (HU); NEGYESI, Ferenc, 6000 Kecskemet (HU)
(74) Vertreter: DTS Patent- und Rechtsanwälte Schnekenbühl und Partner mbB

(57) **Zusammenfassung**

Die vorliegende Erfindung betrifft ein Anhängersteuerventil (10) für einen Anhänger eines Nutzfahrzeugs, mit wenigstens einem Gehäuse (12) und wenigstens einem im Gehäuse (12) geführten Gehäuseeinsatz (14), und mit wenigstens einem Anhängersteuerventilkolben (16) mit einem Zylinderabschnitt (22) und mit einem Kragenabschnitt (20), wobei der Kragenabschnitt (20) des Anhängersteuerventilkolbens (16) im Gehäuseeinsatz (14) in wenigstens einer ersten Stellung zumindest teilweise in einer Aufnahme (14a) geführt ist, wobei im Bereich der Aufnahme (14a) wenigstens ein Rückschlagventil (14b) und wenigstens eine Drosselbohrung (14c) vorgesehen ist.

## Beschreibung

Die vorliegende Erfindung betrifft ein Anhängersteuerventil für einen Anhänger eines Nutzfahrzeugs.

Anhängersteuerventile sind bereits aus dem Stand der Technik bekannt.

Diese werden im Zusammenhang mit Druckluftbremsanlagen zur Ansteuerung des Anhängers eines Nutzfahrzeugs verwendet.

Beispielsweise ist ein Anhängersteuerventil für eine Druckluftbremsanlage für Kraftfahrzeuge bereits aus der DE 196 09 222 A1 bekannt.

Ein entsprechendes Anhängersteuermodul zur Bremssteuerung eines Anhängers und ein Verfahren zum Betreiben des Anhängersteuermoduls ist beispielsweise weiter aus der WO 2011/070003 A1 bekannt.

Bei dem Anhängersteuermodul handelt es sich insbesondere um ein Anhängersteuermodul, das auf der Basis zweier Versorgungsleitungen ausgestaltet ist (auch sog. 2-Line-Principle).

Es hat weiter die Aufgabe, den Anhänger mit Druckluft aus dem Druckluftbehälter zu versorgen, auch während eines Bremsvorgangs. Beide Kreisläufe müssen über den Bremskreislauf ansteuerbar sein. Auch soll es möglich sein, den Anhänger in graduellen Schritten mit stufbarem Bremsdruck betätigen zu können, wenn die Fußbremse oder die Handbremse betätigt wird.

Weitere Anforderungen ergeben sich daraus, dass auch automatische Kupplungen benutzt werden müssen und Druckbereiche zwischen 6 bis 8,5 bar sowohl für den Versorungs- als auch für den Steuerkreislauf anliegen können müssen. Weitere Anforderungen ergeben sich für den Fall, dass es zu einem Versagen der Bremskreisläufe kommt.

Wünschenswert wäre es, für den Kolben des Anhängersteuerventils eine einfache und sichere Luftablasspassage bereitstellen zu können.

Im Zusammenhang mit der Erfüllung gesetzlicher Vorgaben und Normen ist es erforderlich, für den Kolben des Anhängersteuerventils eine einfache und sichere Luftdurchlasspassage bereitstellen zu können.

Es ist daher die Aufgabe der vorliegenden Erfindung, ein Anhängersteuerventil für einen Anhänger eines Nutzfahrzeuges der eingangs genannten Art in vorteilhafter Weise weiterzubilden, insbesondere dahingehend, dass die Betriebscharakteristik des Anhängersteuerventils verbessert werden kann.

Diese Aufgabe wird erfindungsgemäß gelöst durch ein Anhängersteuerventil mit den Merkmalen des Anspruchs 1. Danach ist vorgesehen, dass ein Anhängersteuerventil für einen Anhänger eines Nutzfahrzeugs bereitgestellt wird, mit wenigstens einem Gehäuse und mit wenigstens einem im Gehäuse geführten Gehäuseeinsatz, und mit wenigstens einem Anhängersteuerventilkolben mit einem Zylinderabschnitt und mit einem Kragenabschnitt, wobei der Kragenabschnitt des Anhängersteuerventilkolbens im Gehäuseeinsatz in wenigstens einer ersten Stellung zumindest teilweise in einer Aufnahme geführt ist, wobei im Bereich der Aufnahme wenigstens ein Rückschlagventil und wenigstens eine Drosselbohrung vorgesehen ist.

Die Erfindung basiert auf dem Grundgedanken, eine Abwärtsbewegung des Kolbens des Anhängersteuerventils mittels Druckluft zu ermöglichen. Durch eine gedrosselte Luftzuführung wird darüber hinaus eine langsame Bewegung in der Abwärtsbewegung des Kolbens ermöglicht. Zugleich ist es aber auch möglich, eine vergleichsweise schnelle Entlüftung zu erreichen, wobei eine Entlüftung in diesem Fall über die Drosselbohrung und zusätzlich durch das Rückschlagventil ermöglicht wird. Hierdurch wird eine schnellere Aufwärtsbewegung des Kolbens ermöglicht.

Denkbar ist insbesondere, dass für die Aufwärtsbewegung Buch eine entsprechende Feder vorgesehen ist, die den Kolben entsprechend bei der Aufwärtsbewegung unterstützt.

Des Weiteren kann vorgesehen sein, dass das Rückschlagventil in Strömungsrichtung durch den Gehäuseeinsatz in Richtung auf den Anhängersteuerventilkolben schließt und in umgekehrter Strömungsrichtung öffnet. Hierdurch wird die entsprechende Ausrichtung und Funktionalität für die Aufwärtsbewegung, bei der das Rückschlagventil geöffnet sein soll und die Abwärtsbewegung des Kolbens, bei der das Rückschlagventil geschlossen sein soll, ermöglicht.

Darüber hinaus kann vorgesehen sein, dass der Hohlraum des Anhängersteuerventilkolbens über die Drosselbohrung mit Druck, insbesondere mit Druckluft beaufschlagbar ist, um den Anhängersteuerventilkolben zu bewegen. Bei der Bewegung handelt es sich insbesondere um die Abwärtsbewegung des Anhängersteuerventilkolbens.

Außerdem kann vorgesehen sein, dass die Drosselbohrung auf der dem Anhängersteuerventilkolben abgewandten Seite eine Ansenkung aufweist. Diese Ansenkung ist jedoch eine optionale Ausführung. Die Ansenkung kann oben oder unten oder beidseitig vorhanden sein. Grundsätzlich sind aber auch Ausführungen ohne Ansenkung möglich. Dies ermöglicht die Druckluftzufuhr über die Drosselbohrung in Richtung auf den Anhängersteuerventilkolben.

Des Weiteren kann vorgesehen sein, dass die Drosselbohrung exzentrisch bezogen auf die Längsachse des Anhängersteuerventilkolbens angeordnet ist. Eine derartige Ausgestaltung unterstützt die beabsichtigte langsame Abwärtsbewegung des Anhängersteuerventilkolbens sowie aber auch die schnelle Aufwärtsbewegung, da in diesem Zusammenhang eine günstigere Anordnung des Rückschlagventils ermöglicht wird.

Insbesondere kann in diesem Zusammenhang vorgesehen sein, dass das Rückschlagventil im Wesentlichen konzentrisch bezogen auf die Längsachse des Anhängersteuerventilkolbens angeordnet ist. Die zentrale Lage des Rückschlagventils erleichtert die Fertigung und Anordnung und Montage des Rückschlagventils.

Weitere Einzelheiten und Vorteile der Erfindung sollen nun anhand eines in den Zeichnungen näher dargestellten Ausführungsbeispiels dargestellt werden.

Es zeigen
- Fig. 1: ein erfindungsgemäße Ausführungsbeispiel eines erfindungsgemäßen Anhängersteuerventils ; und
- Fig. 2: eine perspektivische Detaildarstellung des Anhängersteuerventils gemäß Fig. 1

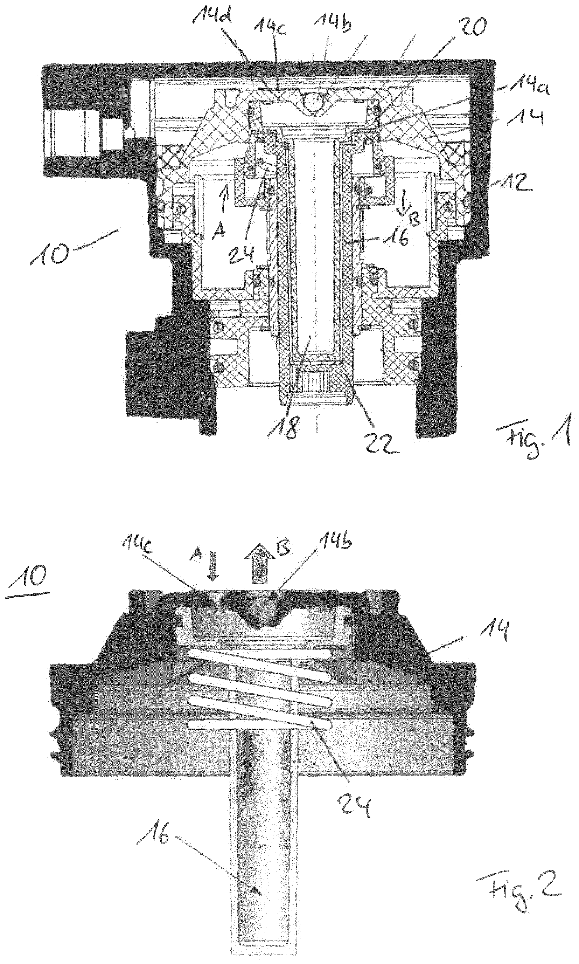

**Fig. 1** zeigt in einer Schnittdarstellung ein Anhängersteuerventil 10.

Das Anhängersteuerventil 10 weist dabei ein Gehäuse 12 und einen im Gehäuse 12 geführten Gehäuseeinsatz 14 auf.

Der Gehäuseeinsatz 14 ist dabei an den Innenseiten des Gehäuses 12 beweglich geführt.

Darüber hinaus ist ein Anhängersteuerventilkolben 16 vorgesehen, der im Gehäuse 12 eine Aufwärtsbewegung B und eine Abwärtsbewegung A durchführen kann.

Der Anhängersteuerventilkolben 16 weist dabei einen Hohlraum 18 auf.

Dieser Hohlraum 18 erleichtert die Fertigung und kann im Kolbenstiel vorhanden sein. Dies ist jedoch nicht zwingend erforderlich.

Außerdem weist der Anhängersteuerventilkolben 16 einen Kragenabschnitt 20 auf.

Der Kragenabschnitt 20 ist dabei im Gehäuseeinsatz 14 geführt.

Darüber hinaus schließt an den Kragenabschnitt 20 ein Zylinderabschnitt 22 an.

In der in Fig. 1 gezeigten ersten Stellung ist der Kragenabschnitt 20 des Anhängersteuerventilkolbens 16 zumindest teilweise in einer Aufnahme 14a des Gehäuseeinsatzes 14 geführt.

Im Bereich der Aufnahme 14a ist weiter zentral ein Rückschlagventil 14b und eine Drosselbohrung 14c vorgesehen.

Das Rückschlagventil 14b ist allerdings nicht zwingend zentral anzuordnen, eine zentrale Anordnung erleichtert lediglich die Fertigung.

Das Rückschlagventil 14b ist dabei in strömungsrichtung durch den Gehäuseeinsatz 14 in Richtung auf den Anhängersteuerventilkolben 16 schließend ausgebildet und öffnet in umgekehrter Strömungsrichtung, d.h. bei einer Aufwärtsbewegung in Richtung B.

Der Hohlraum 18 des Anhängersteuerventilkolbens 16 kann über die Drosselbohrung 14c mit Druck, insbesondere mit Druckluft beaufschlagt werden.

Die Drosselbohrung 14c weist auf der dem Anhängersteuerventilkolben 16 abgewandten Seite eine Ansenkung 14d auf. Diese Ansenkung 14d kann oben, unten, beidseitig oder auch gar nicht vorhanden sein.

Die Drosselbohrung 14c ist dabei exzentrisch angeordnet, wohingegen das Rückschlagventil 14b im Wesentlichen konzentrisch bezogen auf die Längsachse des Anhängersteuerventilkolbens 16 angeordnet ist.

Die Aufwärtsbewegung in Richtung B wird weiter durch eine Feder 24 unterstützt, die sowohl in Fig. 1 als auch in **Fig. 2** ersichtlich ist. Diese Unterstützung ist nicht zwingend. Auf den Kolben 16 wirkt nach oben, neben der Federkraft, vorwiegend der Reaktionsdruck der zum Anhänger ausgesteuerten Luft.

Die Funktion lässt sich wie folgt beschreiben :
Für die Abwärtsbewegung in Richtung A kann der Kolben 16 mit Druckluft betätigt werden, die über die Drosselbohrung 14c einströmt. Durch die Drosselung wird eine langsame Bewegung in der Abwärtsbewegung A ermöglicht.

Sobald eine Aufwärtsbewegung vonnöten ist, kann diese Bewegung durch die Feder 24 unterstützt werden. Die Druckluft kann über das Rückschlagventil 14b, aber auch über die Drosselbohrung 14c entweichen.

### BEZUGSZEICHENLISTE

- 10: Anhängersteuerventil
- 12: Gehäuse
- 14: Gehäuseeinsatz
- 14a: Aufnahme
- 14b: Rückschlagventil
- 14c: Drosselbohrung
- 14d: Ansenkung
- 16: Anhängersteuerventilkolben
- 18: Hohlraum
- 20: Kragenabschnitt
- 22: Zylinderabschnitt
- 24: Feder

- B: Aufwärtsbewegung
- A: Abwärtsbewegung

## Patentansprüche

1. Anhängersteuerventil (10) für einen Anhänger eines Nutzfahrzeugs, mit wenigstens einem Gehäuse (12) und wenigstens einem im Gehäuse (12) geführten Gehäuseeinsatz (14), und mit wenigstens einem Anhängersteuerventilkolben (16) mit einem Zylinderabschnitt (22) und mit einem Kragenabschnitt (20), wobei der Kragenabschnitt (20) des Anhängersteuerventilkolbens (16) im Gehäuseeinsatz (14) in wenigstens einer ersten Stellung zumindest teilweise in einer Aufnahme (14a) geführt ist, wobei im Bereich der Aufnahme (14a) wenigstens ein Rückschlagventil (14b) und wenigstens eine Drosselbohrung (14c) vorgesehen ist.

2. Anhängersteuerventil (10) nach Anspruch 1,
**dadurch gekennzeichnet, dass**
das Rückschlagventil (14b) in Strömungsrichtung durch den Gehäuseeinsatz (14) in Richtung auf den Anhängersteuerventilkolben (16) schließt und in umgekehrter Strömungsrichtung öffnet.

3. Anhängersteuerventil (10) nach Anspruch 1 oder Anspruch 2,
**dadurch gekennzeichnet, dass**
der Hohlraum (18) des Anhängersteuerventilkolbens (16) über die Drosselbohrung (14c) mit Druck, insbesondere Druckluft beaufschlagbar ist, um den Anhängersteuerventilkolben (16) zu bewegen.

4. Anhängersteuerventil (10) nach einem der vorhergehenden Ansprüche,
**dadurch gekennzeichnet, dass**
die Drosselbohrung (14c) auf der dem Anhängersteuerventilkolben (16) abgewandten Seite eine Ansenkung (14d) aufweist.

5. Anhängersteuerventil (10) nach einem der vorhergehenden Ansprüche,
**dadurch gekennzeichnet, dass**
die Drosselbohrung (14c) exzentrisch bezogen auf die Längsachse des Anhängersteuerventilkolbens (16) angeordnet ist.

6. Anhängersteuerventil (10) nach einem der vorhergehenden Ansprüche,
**dadurch gekennzeichnet, dass**
das Rückschlagventil (14b) im Wesentlichen konzentrisch bezogen auf die Längsachse des Anhängersteuerventilkolbens (16) angeordnet ist.
